# FASCICULE DE BREVET EUROPEEN

(11) **EP 3 711 304 B1**
(45) Date de publication et mention de la délivrance du brevet: **05.07.2023**
(21) Numéro de dépôt: 18762366.5
(22) Date de dépôt: 03.08.2018
(51) Int. Cl.: H04N 21/236, H04N 21/2365

(54) **METHODE D'AFFICHAGE D'UN CONTENU TEXTUEL, DISPOSITIF ET PROGRAMMES ASSOCIES**
VERFAHREN ZUR ANZEIGE VON TEXTINHALT SOWIE ZUGEHÖRIGE VORRICHTUNG UND PROGRAMME
METHOD FOR DISPLAYING TEXT CONTENT, AND ASSOCIATED DEVICE AND PROGRAMS

(30) Priorité: 17.11.2017 FR 1701192
(43) Date de publication de la demande: 23.09.2020
(73) Titulaire: Université de Rennes, 35042 Rennes (FR); Le Floch, Albert, 35700 Rennes (FR)
(72) Inventeur: LE FLOCH, Albert, 35700 Rennes (FR); ROPARS, Guy, 35000 Rennes (FR)
(74) Mandataire: Novagraaf Technologies
(86) Numéro de dépôt international: PCT/FR2018/052010
(87) Numéro de publication internationale: WO 2019/097127

(56) Documents cités:
- EP-A1- 1 571 644
- EP-A1- 2 339 842
- WO-A1-2014/110553
- US-A1- 2014 196 097
- US-A1- 2014 344 839

## Description

### 1. Domaine de l'invention.

La présente invention concerne une méthode d'affichage d'un contenu graphique, représentant notamment des éléments textuels. Plus particulièrement, l'invention concerne une méthode d'affichage améliorant la lecture de contenus, notamment textuels, pour des personnes sujettes à la dyslexie.

### 2. Etat de l'art.

Les documents EP 2 339 842 A1, WO 2014/110553 A1 et EP 1 571 644 A1 décrivent des méthodes d'affichage de contenus textuels. En particulier, le document EP 1 571 644 A1 concerne un écran à cristaux liquides qui empêche l'apparition de flou lors de l'affichage d'images animées, en simulant un affichage de type impulsionnel.

La dyslexie est communément définie comme un ensemble de troubles de la lecture qui apparaissent à l'enfance. Il s'agit de troubles spécifiques d'apprentissage dont les causes apparaissent complexes et ont fait et font toujours l'objet de nombreuses études dans des domaines variés.

Il est généralement exclu de considérer que les causes de la dyslexie puissent être uniquement d'ordre sensoriel, social ou psychologique.

Des études menées dans le domaine des neurosciences permettent de penser qu'il pourrait s'agir d'un trouble neurologique spécifique.

Les progrès réalisés dans le domaine de l'imagerie médicale ont pu mettre en évidence le rôle de certaines zones du cerveau dans les processus de lecture et de maîtrise du langage.

Les solutions apportées pour traiter les troubles de la dyslexie s'appuient sur des travaux et activités ludiques selon les difficultés propres à chaque sujet. L'objectif d'un tel accompagnement est d'apporter au sujet objet de troubles une autonomie en matière de lecture. Les méthodes connues sont développées autour de travaux dans des domaines tels que la psychologie, la psychomotricité et l'orthoptie, par exemple.

Récemment, des études ont été conduites, établissant une corrélation entre des particularités propres au mécanisme de la vision et la présence de troubles spécifiques de la dyslexie. La publication "Left-right asymmetry of the Maxwell spot centroids in adults without and with dyslexia (Le Floch A, Ropars G. 2017, Proc. R. Soc. B 284: 20171380, http://dx.doi.org/10.1098/rspb.2017.1380) mentionne le rôle des fovéas, situées dans l'œil humain, dans la construction des images perçues, au niveau cérébral, et le fait que des caractéristiques identiques ou sensiblement identiques pour les deux yeux d'un même sujet entraînent chez lui des dysfonctionnements dans le processus de la vision et du traitement phonologique au niveau cérébral. La transmission d'une image miroir d'un hémisphère à l'autre, par exemple, perturbe sensiblement le processus de lecture d'éléments graphiques ou de contenus textuels chez des sujets présentant des troubles caractéristiques de la dyslexie. Des troubles liés à une instabilité de la fixation et/ou une instabilité posturologique, ou encore des défauts de convergence binoculaire liés aux muscles oculomoteurs, peuvent entraîner des encombrements visuels comme l'effet miroir.

### 3. Résumé de l'invention.

L'invention permet d'améliorer au moins certains des inconvénients de l'art antérieur en proposant une méthode d'affichage, dans un dispositif de restitution de contenus, d'un contenu graphique. La méthode proposée comprend une alternance de périodes d'affichage, pendant lesquels tout ou partie du contenu graphique est affiché, et de périodes d'absence d'affichage, pendant lesquels le contenu graphique n'est pas affiché, selon des cycles périodiques successifs opérés à une fréquence Fd prédéterminée. Chaque cycle présente une durée T et comprend une période d'affichage de durée T1 suivie ou précédée d'une période de non affichage de durée T2. La durée T1 est comprise dans un intervalle de valeurs allant de 15 à 30% de la durée T desdits cycles.

Selon un mode de réalisation de l'invention, la fréquence Fd prédéterminée est définie par un utilisateur d'un dispositif mettant en oeuvre la méthode d'affichage selon l'invention.

Selon un mode de réalisation de l'invention, la fréquence prédéterminée est comprise dans un intervalle de valeurs allant de 60 à 90 Hz, grâce à un système accordable fonctionnant alors en dispositif anti-encombrement visuel.

La méthode mise en oeuvre met à profit les mécanismes hébbiens dans les neurones du cortex. Avantageusement, l'utilisation d'une gamme de fréquences à partir de 60 Hz permet de s'affranchir des effets de clignotements perceptibles par l'œil de l'être humain, la limite de perception du clignotement par l'œil se situant aux alentours de 60 Hz, pour l'être humain (hors considération, des espèces animales et des insectes).

Selon un mode de réalisation de l'invention, la fréquence prédéterminée est sélectionnée de façon discrète, c'est-à-dire parmi une pluralité de fréquences prédéterminées dans l'intervalle de fréquences susmentionné.

Selon une variante du mode de réalisation, la fréquence Fd varie dans le temps, afin de faciliter plus encore, dans certains cas, l'effacement de l'encombrement visuel et la stabilité binoculaire.

Selon un mode de réalisation, la fréquence Fd varie en croissant par pas successifs jusqu'à une valeur maximale selon une première vitesse, dite vitesse de croissance, puis varie en décroissant par pas successifs jusqu'à une valeur minimale selon une seconde vitesse, dite vitesse de décroissance, les variations croissantes et décroissantes se répétant itérativement dans le temps.

Selon un mode de réalisation, ladite vitesse de décroissance et égale à ladite vitesse de croissance.

Selon un mode de réalisation, lesdits pas successifs sont de durées égales.

Selon un mode de réalisation, lesdits pas successifs varient en durée de sorte que la valeur de ladite fréquence Fd évolue selon une forme d'onde en triangle, en scie, ou en sinusoïde entre ladite valeur maximale et ladite valeur minimale.

Selon un mode de réalisation de l'invention, la durée T1 des périodes d'affichage varie dans le temps.

L'invention concerne également un dispositif d'affichage comprenant un module de restitution de contenus graphiques configuré pour alterner des périodes d'affichage, pendant lesquels tout ou partie du contenu graphique est affiché, et des périodes d'absence d'affichage, pendant lesquels le contenu graphique n'est pas affiché, selon des cycles successifs opérés à une fréquence prédéterminée. Chaque cycle a une durée T et comprend une période d'affichage de durée T1 suivie ou précédée d'une période de non affichage de durée T2. Selon l'invention, le dispositif d'affichage est en outre configuré pour que la durée T1 des périodes d'affichage soit comprise dans un intervalle de valeurs allant de 15 à 30% de la durée T des cycles.

Selon un mode de réalisation de l'invention, la fréquence prédéterminée des cycles alternant des périodes d'affichage et de non affichage est comprise dans un intervalle de valeurs allant de 60 à 90 Hz.

L'invention concerne également un programme d'ordinateur comprenant des instructions de code de programme pour exécuter les étapes de la méthode décrite ci-avant lorsque ce programme est exécuté sur un ordinateur. Il est entendu ici par ordinateur tout dispositif de restitution comprenant une unité de contrôle et des moyens d'affichage d'un contenu reçu ou mémorisé, tel que, à titre d'exemples non limitatifs un écran, un téléviseur, une tablette, un ordinateur fixe ou portable, un smartphone, une montre intelligente, un casque de visualisation.

Selon l'invention, l'alternance de périodes d'affichage et de non affichage du contenu graphique à représenter permet une "focalisation" du cerveau d'un sujet regardant ce contenu graphique affiché, sur une image représentative du contenu affiché, puis, une disparition de cette même image de la vue du sujet avant qu'elle ne soit transmise sous forme d'image miroir entre un hémisphère cérébral et l'autre hémisphère cérébral de ce sujet regardant le contenu restitué. Le délai requis pour que le cerveau transmette une image, perçue par l'œil, entre un hémisphère et l'autre hémisphère, sous forme d'image miroir pour ce dernier, est de l'ordre de 10 ms. Ainsi, le cerveau privilégie l'image transmise par rapport à son image miroir, et la confusion existante chez le sujet qui présente une forte similarité des caractéristiques de ses deux fovéas, est moindre ou sensiblement diminuée pour la lecture du contenu graphique, notamment lorsque ce contenu est représentatif d'un ou plusieurs contenus textuels.

Avantageusement, l'utilisation d'un commutateur configuré pour afficher sélectivement un contenu graphique selon une méthode d'affichage « ordinaire » (affichage permanent du contenu graphique) ou selon une méthode d'affichage mettant en oeuvre la présente invention (alternance de périodes d'affichage et de non affichage) permet à un utilisateur sujet à des troubles dyslexiques de comparer ses performances usuelles en lecture / visualisation (obtenues avec l'affichage ordinaire) à ses performances obtenues sous contrôle de la méthode d'affichage selon l'invention après optimisation éventuelle de ses propres paramètres (paramètres de fréquence et de rapport cyclique permettant à l'utilisateur d'obtenir un meilleur confort de visualisation).

### 4. Liste des figures.

L'invention sera mieux comprise, et d'autres particularités et avantages apparaîtront à la lecture de la description qui va suivre, la description faisant référence aux dessins annexés parmi lesquels :
- la **figure 1** est un schéma de représentation d'un signal Ed de commande (contrôle) d'affichage selon un mode de réalisation particulier et non limitatif de l'invention.
- la **figure 2** est une représentation structurelle de l'architecture d'un dispositif d'affichage DISP selon un mode de réalisation particulier et non-limitatif de l'invention.

### 5. Description détaillée de modes de réalisation de l'invention.

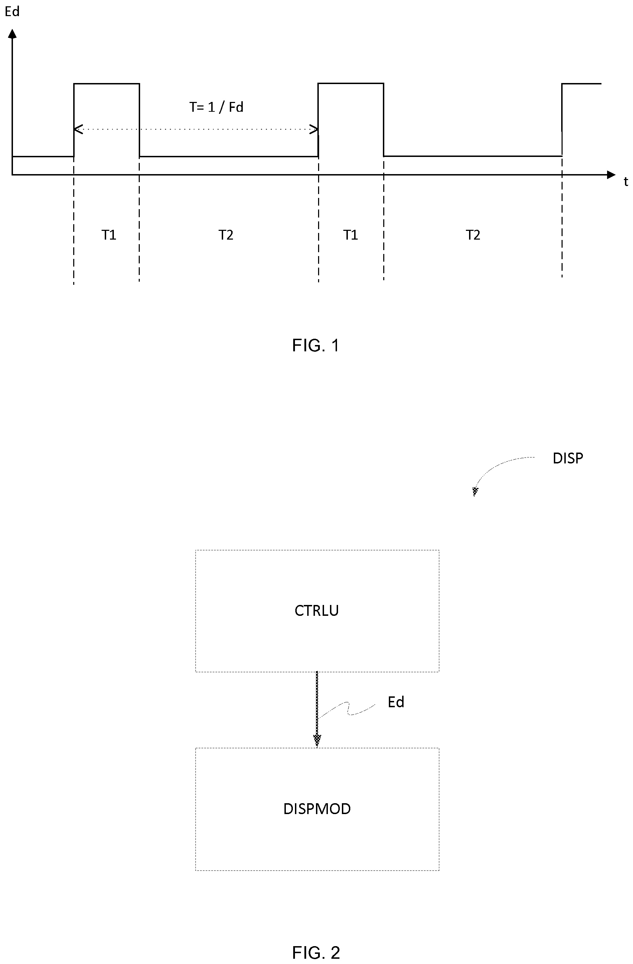

La **figure 1** est une représentation temporelle d'un signal Ed de commande d'affichage et d'effacement d'un contenu à représenter, dans un dispositif d'affichage (de restitution de contenu), selon un mode de réalisation particulier et non limitatif de l'invention. Le signal Ed varie selon le temps t et prend périodiquement deux états successifs. Selon le mode de réalisation préféré, une assertion du signal Ed à l'état haut autorise l'affichage d'un contenu graphique sur un élément de restitution d'un dispositif DISP d'affichage et efface, empêche ou inhibe l'affichage du contenu graphique considéré lorsque le signal Ed est à l'état bas. Le signal Ed est un signal périodique de fréquence prédéterminé Fd tel que Fd = 1/(T1 +T2). T1 est la période d'activation du signal, soit la période d'affichage du motif dans le dispositif d'affichage et T2 est la période, dite de non-affichage, durant laquelle le signal est inactif, ou en d'autres termes la période pendant laquelle le contenu graphique est effacé ou son affichage est inhibé ou empêché. Les termes "contenu graphique" sont à interpréter ici comme n'importe quel contenu à représenter et constitué d'éléments élémentaires tels que, à titre d'exemple des pixels, de sorte que le contenu représente des éléments de formes variées et notamment un ou plusieurs contenus textuels construits à partir de signes ou de symboles d'un ou plusieurs alphabets.

Ainsi un contenu textuel correspond à un contenu interprétable dans un ou plusieurs langages, susceptible d'être lu et interprété par un sujet, utilisateur, positionné de sorte à regarder le dispositif d'affichage pour une opération de lecture ou de visualisation. Un tel dispositif est, à titre d'exemples, un écran de restitution, un ordinateur, une tablette tactile ou non, un smartphone, une montre intelligente, un dispositif livre numérique, un dispositif de guidage ou d'aide à la circulation de véhicules ou de piétons, la liste de ces exemples étant bien évidemment non exhaustive.

Selon le mode de réalisation préféré de l'invention, le rapport cyclique T1/(T1+T2) entre les périodes d'affichage et de non affichage, respectivement de durées T1 et T2, a une valeur comprise entre 15% et 30% du cycle et la fréquence Fd de variation du signal Ed est comprise entre 60 Hz et 90 Hz.

De façon préférée, la fréquence du signal est égale à 70 Hz ou 84 Hz et le rapport cyclique T1/(T1+T2) est égal à 20%.

Avantageusement, le signal de contrôle peut être aisément forcé de façon prolongée dans son état associé à un affichage, ce qui correspond à un débrayage de la méthode d'affichage selon l'invention. Il serait ainsi possible de ne pas mettre en oeuvre la méthode d'affichage selon l'invention dans le cas où, pour un sujet non dyslexique, une gêne visuelle apparaitrait.

Avantageusement, il est possible d'affiner le réglage de la fréquence Fd dans l'intervalle de valeurs décrit dans le but d'adapter la période T à la sensibilité d'un utilisateur du dispositif de restitution de contenus DISP, dans la gamme de fréquences indiquée. En effet, chaque individu possède une sensibilité propre en termes de vision et perçoit plus ou moins des variations de fréquence d'affichage. Ainsi, un réglage fin peut être rendu accessible à l'utilisateur par l'intermédiaire d'un bouton de réglage, d'un curseur, implémenté matériellement ou via une interface graphique utilisateur (éléments graphiques d'un menu, par exemple).

La **figure 2** est une représentation structurelle un dispositif d'affichage DISP selon un mode de réalisation particulier et non-limitatif de l'invention. Cette figure représente l'architecture globale du dispositif de restitution de contenus DISP, encore communément appelé dispositif d'affichage. Le dispositif DISP comprend deux modules principaux qui sont une unité de contrôle CTRLU et un module d'affichage DISPMOD. L'unité de contrôle CTRLU est le coeur du système en termes de contrôle et comprend classiquement un ou plusieurs microcontrôleurs reliés à des mémoires de stockage volatile et non-volatile. Les mémoires volatiles sont principalement utilisées pour toutes les opérations utiles à la mise en oeuvre du système global, tel que l'exécution d'un ou plusieurs logiciels ou pilotes de matériels. Bien évidemment l'unité de contrôle CTRLU comprend tous les éléments usuels mis en oeuvre dans une telle architecture, tels que, à titre d'exemples, une alimentation, un ou plusieurs circuits de remise à zéro, un circuit de supervision d'alimentation, une interface de puissance, un ou plusieurs circuits d'horloge, des ports d'entrées/sorties numériques et analogiques, une ou plusieurs sondes de température, une unité de stockage de masse (disque dur, mémoire flash ou une évolution de ces composants), des entrées d'interruption, des ports de communication filaires ou sans-fil, etc. La liste de ces éléments n'est pas exhaustive. Les détails architecturaux de l'unité de contrôle DISP ne sont pas décrits plus encore dans la mesure où ceux-ci ne sont pas utiles à la compréhension de l'invention.

Le module d'affichage DISPMOD est un contrôleur graphique adapté à la représentation d'un ou plusieurs contenus graphiques et textuels sur un écran, tactile ou non, à partir de données représentatives de ce contenu, stockées dans une mémoire d'affichage. La mémoire d'affichage peut contenir plusieurs plans graphiques, superposables à l'affichage. Ainsi, par exemple, un plan graphique P1 peut être contenu dans une zone M1 de la mémoire d'affichage, un plan P2 peut être contenu dans une zone M2 de la mémoire d'affichage, et le module d'affichage DISPMOD peut contrôler l'affichage du plan P1 et du plan P2 indépendamment l'un de l'autre, tout en pouvant les représenter simultanément en superposition totale ou partielle quand les deux plans P1 et P2 sont activés simultanément.

La mémoire d'affichage peut être propre au module DISPMOD ou comprise dans la mémoire de données de l'unité de contrôle CTRLU. Tous les détails architecturaux de l'unité de contrôle DISP ne sont pas décrits ici dans la mesure où ceux-ci ne sont pas utiles à la compréhension de l'invention. C'est la capacité à inhiber l'affichage d'un ou plusieurs plans graphiques, sous contrôle logiciel ou matériel, et selon la méthode décrite, qui importe pour permettre avantageusement au cerveau d'un sujet de privilégier une image plutôt que son image miroir, perçue à partir du dispositif d'affichage DISP mettant en oeuvre la méthode selon l'invention. Avantageusement, cela permet d'aider conséquemment la lecture et le déchiffrage de contenus textuels, chez un sujet présentant des troubles dyslexiques.

Avantageusement, l'unité de contrôle CTRLU comprend en sortie un signal de contrôle (ou de validation) d'affichage Ed, connecté en entrée du module d'affichage DISPMOD, permettant de valider ou d'inhiber temporairement l'affichage d'un ou plusieurs plan(s) graphique(s) (P1, P2).

Ainsi, quand le signal est activé par positionnement à l'état haut (par exemple), l'affichage du plan en correspondance, ou de tous les plans selon la configuration en cours, est activé. Inversement, quand le signal Ed est positionné dans son état inactif (état bas, par exemple), l'affichage du plan graphique en correspondance, ou de tous les plans graphiques selon la configuration, est inhibé. Ceci correspond à une phase de« non-affichage » du contenu graphique (de disparition du contenu pour un sujet regardant le dispositif DISP.

En d'autres termes, les variations du signal de contrôle d'affichage Ed, opérées par l'unité de contrôle CTRLU, à une fréquence Fd, peuvent agir sur la restitution d'un contenu graphique de sorte que ce contenu graphique soit affiché et inhibé (non affiché) périodiquement sur le dispositif d'affichage DISP selon des cycles successifs de longueur totale T et opérés à une fréquence Fd prédéterminée. Selon l'invention, les périodes d'affichage successives T1 ont chacune une durée comprise dans un intervalle de valeurs allant de 15 à 30% de la durée T desdits cycles opérés.

Selon une variante de l'invention, le signal de contrôle Ed peut être intégré au contrôleur graphique disposant de sa propre unité de contrôle et étant configuré pour valider et inhiber l'affichage d'un contenu selon la méthode décrite (alternance d'affichage et de non-affichage à la fréquence indiquée ci-avant et avec un rapport cyclique tel que précisé ci-avant).

La fréquence Fd des cycles (comprenant chacun une période d'ouverture de l'espace de vision et une période de fermeture de l'espace de vision) est comprise entre 60 et 90 Hz.

Selon un mode de réalisation, la fréquence Fd est fixe.

Selon un autre mode de réalisation, la fréquence Fd varie dans le temps.

Selon un mode de réalisation particulier, la fréquence Fd varie en croissant par pas successifs jusqu'à une valeur maximale selon une première vitesse, dite vitesse de croissance, puis varie en décroissant par pas successifs jusqu'à une valeur minimale selon une seconde vitesse, dite vitesse de décroissance, les variations croissantes et décroissantes se répétant itérativement dans le temps.

Selon un mode de réalisation particulier, la vitesse de décroissance et égale à la vitesse de croissance.

Selon un mode de réalisation particulier, les pas successifs sont de durées égales.

Selon un autre mode de réalisation particulier, les pas successifs varient en durée de sorte que la valeur de ladite fréquence Fd évolue selon une forme d'onde en triangle, en scie, ou en sinusoïde entre ladite valeur maximale et ladite valeur minimale.

Avantageusement la durée T1 des périodes d'affichage varie dans le temps en évoluant de façon continue ou discontinue entre des valeurs bornes allant de 15 à 30% de la durée T des cycles. Il est entendu ici par de « façon continue » une évolution par incrément des pas successifs de durées égales.

Le phénomène de wobulation ainsi créé et appliqué à la fréquence Fd prédéterminée (variation de la fréquence Fd) permet de balayer un grand nombre de fréquences entre 60 Hz et 90 Hz, dont certaines seront plus efficaces pour l'aide à la lecture. Ces fréquences plus efficaces varient selon le sujet dyslexique. En balayant toutes les fréquences entre 60 et 90 Hz, le dispositif de l'invention ne nécessite aucun réglage préalable et devient efficace pour un grand nombre d'utilisateurs. Ce phénomène de wobulation permet ainsi et dans certains cas, de réduire plus encore des ennuis liés à des troubles dyslexiques.

Un même avantage découle des variations de la durée T1 des périodes d'affichage.

L'invention ne se limite pas aux seuls modes de réalisation décrits ci-avant, mais s'applique à toute méthode d'affichage d'un contenu graphique, comprenant notamment des éléments textuels, mettant en oeuvre des opérations successives d'affichage et de non-affichage périodiquement de ce contenu graphique, sur un dispositif d'affichage, selon des cycles successifs opérés à une fréquence Fd prédéterminée telle que les périodes d'affichage T1 successives ont chacune une durée comprise dans un intervalle de valeurs allant de 15 à 30% de la durée T cycles opérés. L'invention s'applique en outre à tout dispositif mettant en oeuvre la méthode précitée.

## Revendications

1. Méthode pour améliorer la lecture de contenus, notamment textuels, pour des personnes sujettes à la dyslexie, et comprenant l'affichage, dans un dispositif (DISP) de restitution de contenus, d'un contenu graphique,
ladite méthode étant **caractérisée en ce qu'**elle comprend une alternance de périodes d'affichage, pendant lesquels tout ou partie du contenu graphique est affiché, et de périodes d'absence d'affichage, pendant lesquels le contenu graphique n'est pas affiché, selon des cycles périodiques successifs opérés à une fréquence F_{d} prédéterminée,
chaque cycle ayant une durée T et comprenant une période d'affichage de durée T₁ suivie ou précédée d'une période de non affichage de durée T₂, ladite fréquence F_{d} étant définie par la relation F_{d} = 1 / [T₁+T₂]
**en ce que** la fréquence F_{d} est comprise dans un intervalle de valeurs allant de 60 à 90 Hz, et **caractérisée en ce que**
la durée T₁ est comprise dans un intervalle de valeurs supérieures ou égales à 15 % et inférieures à 30 %, de la durée T desdits cycles.

2. Méthode selon la revendication 1, selon laquelle la fréquence F_{d} est égale à 70 Hz ou 84 Hz et le rapport cyclique T₁ / [T₁+T₂] est égal à 20%.

3. Méthode selon la revendication 1 ou 2, selon laquelle la fréquence varie dans le temps.

4. Méthode selon la revendication 3, selon laquelle la fréquence prédéterminée varie en croissant par pas successifs jusqu'à une valeur maximale selon une première vitesse, dite vitesse de croissance, puis varie en décroissant par pas successifs jusqu'à une valeur minimale selon une seconde vitesse, dite vitesse de décroissance, les variations croissantes et décroissantes se répétant itérativement dans le temps.

5. Méthode selon la revendication 4, selon laquelle ladite vitesse de décroissance est égale à ladite vitesse de croissance.

6. Méthode selon la revendication 5, selon laquelle lesdits pas successifs sont de durées égales.

7. Méthode selon la revendication 5, selon laquelle lesdits pas successifs varient en durée de sorte que la valeur de ladite fréquence F_{d} évolue selon une forme d'onde en triangle, en scie, ou en sinusoïde entre ladite valeur maximale et ladite valeur minimale.

8. Méthode selon l'une quelconque des revendications précédentes, selon laquelle la durée T₁ f+4^- desdites des périodes d'affichage varie dans le temps.

9. Méthode d'affichage selon l'une quelconque des revendications précédentes, selon laquelle ledit dispositif d'affichage est compris dans la liste : écran de restitution, ordinateur, tablette, tablette tactile, téléphone, smartphone, montre intelligente, livre numérique, guide ou appareil d'aide à la circulation de véhicules ou de piétons.

10. Méthode selon l'une quelconque des revendications précédentes, selon laquelle ladite fréquence F_{d} prédéterminée est définie par un utilisateur.

11. Dispositif d'affichage (DISP) pour son utilisation dans le traitement des troubles de la dyslexie, le dispositif comprenant un module (DISPMOD) de restitutions de contenus graphique, **caractérisé en ce que** ledit dispositif d'affichage (DISP) est configuré pour alterner des périodes d'affichage, pendant lesquels tout ou partie du contenu graphique est affiché, et des périodes d'absence d'affichage, pendant lesquels le contenu graphique n'est pas affiché, selon des cycles successifs opérés à une fréquence F_{d} prédéterminée, chaque cycle ayant une durée T et comprenant une période d'affichage de durée T₁ suivie ou précédée d'une période de non affichage de durée T₂, **en ce que** ledit dispositif d'affichage est configuré pour que la fréquence F_{d} est comprise dans un intervalle de valeurs allant de 60 à 90 Hz, et en étant
**caractérisé en ce que** U
la durée T₁ est comprise dans un intervalle de valeurs supérieures ou égales à 15 % et inférieures à 30 %, de la durée T desdits cycles.

12. Produit programme d'ordinateur, **caractérisé en ce qu'**il comprend des instructions de code de programme pour exécuter les étapes de la méthode selon l'une quelconque des revendications 1 à 9, lorsque ledit programme est exécuté sur un ordinateur.

## Patentansprüche

1. Verfahren zum Verbessern des Lesens von Inhalten, insbesondere von Textinhalten, für Personen, die zu Dyslexie neigen, und umfassend das Anzeigen eines grafischen Inhalts in einer Vorrichtung (DISP) zur Wiedergabe von Inhalten,
wobei das Verfahren **dadurch gekennzeichnet ist, dass** es abwechselnde Anzeigeperioden, in denen der gesamte oder ein Teil des grafischen Inhalts angezeigt wird, und Perioden ohne Anzeige, in denen der grafische Inhalt nicht angezeigt wird, gemäß aufeinanderfolgenden periodischen Zyklen, die mit einer vorgegebenen Frequenz F_{d} betrieben werden, umfasst,
wobei jeder Zyklus eine Dauer T aufweist und eine Anzeigeperiode mit der Dauer T₁ umfasst, der eine Nichtanzeigeperiode mit der Dauer T₂ folgt oder vorausgeht, wobei die Frequenz F_{d} durch die Beziehung F_{d} = 1 / [T₁+T₂] definiert ist, wobei die Frequenz F_{d} in einem Wertebereich von 60 bis 90 Hz liegt, und
**dadurch gekennzeichnet, dass**
die Dauer T₁ in einem Bereich von Werten liegt, die größer als oder gleich 15 % und kleiner als 30 % der Dauer T der genannten Zyklen ist.

2. Verfahren nach Anspruch 1, wobei die Frequenz F_{d} gleich 70 Hz oder 84 Hz ist und das Zyklusverhältnis T₁ / [T₁+T₂] gleich 20 % ist.

3. Verfahren nach Anspruch 1 oder 2, wobei die Frequenz F_{d} mit der Zeit variiert.

4. Verfahren nach Anspruch 3, wobei die vorgegebene Frequenz F_{d} in aufeinanderfolgenden Schritten bis zu einem Maximalwert gemäß einer ersten Geschwindigkeit, der Anstiegsgeschwindigkeit, ansteigend variiert und dann in aufeinanderfolgenden Schritten bis zu einem Minimalwert gemäß einer zweiten Geschwindigkeit, der Sinkgeschwindigkeit, abfallend variiert, wobei sich die ansteigenden und abfallenden Variationen iterativ mit der Zeit wiederholen.

5. Verfahren nach Anspruch 4, wobei die Sinkgeschwindigkeit gleich der Anstiegsgeschwindigkeit ist.

6. Verfahren nach Anspruch 5, wobei die aufeinanderfolgenden Schritte von gleicher Dauer sind.

7. Verfahren nach Anspruch 5, wobei die aufeinanderfolgenden Schritte in ihrer Dauer variieren, sodass sich der Wert der Frequenz F_{d} in einer Dreiecks-, Sägezahn- oder Sinuswellenform zwischen dem Maximalwert und dem Minimalwert bewegt.

8. Verfahren nach einem der vorstehenden Ansprüche, wobei die Dauer T₁ der Anzeigeperioden mit der Zeit variiert.

9. Anzeigeverfahren nach einem der vorstehenden Ansprüche, wobei die Anzeigevorrichtung in der folgenden Liste enthalten ist: Wiedergabedisplay, Computer, Tablet, Touchpad, Telefon, Smartphone, Smartwatch, digitales Buch, Anleitung oder Hilfsgerät für den Fahrzeug- oder Fußgängerverkehr.

10. Verfahren nach einem der vorstehenden Ansprüche, wobei die vorbestimmte Frequenz F_{d} durch einen Benutzer definiert wird.

11. Anzeigevorrichtung (DISP) zum Verwenden bei der Behandlung von Dyslexie-Störungen, wobei die Vorrichtung ein Modul (DISPMOD) zur Wiedergabe von grafischen Inhalten umfasst, **dadurch gekennzeichnet, dass** die Anzeigevorrichtung (DISP) so konfiguriert ist, dass sich Anzeigeperioden, in denen der gesamte oder ein Teil des grafischen Inhalts angezeigt wird, und Perioden ohne Anzeige, in denen der grafische Inhalt nicht angezeigt wird, gemäß aufeinanderfolgenden Zyklen, die mit einer vorbestimmten Frequenz F_{d} betrieben werden, abwechseln, wobei jeder Zyklus eine Dauer T aufweist und eine Anzeigeperiode mit der Dauer T₁ umfasst, der eine Nichtanzeigeperiode mit der Dauer T₂ folgt oder vorausgeht, wobei die Anzeigevorrichtung so konfiguriert ist, dass die Frequenz F_{d} in einem Wertebereich von 60 bis 90 Hz liegt, und **dadurch gekennzeichnet, dass** die Dauer T₁ in einem Bereich von Werten liegt, die größer als oder gleich 15 % und kleiner als 30 % der Dauer T der Zyklen liegt.

12. Computerprogrammprodukt, **dadurch gekennzeichnet, dass** es Programmcodeanweisungen zum Ausführen der Schritte des Verfahrens nach einem der Ansprüche 1 bis 9 umfasst, wenn das Programm auf einem Computer ausgeführt wird.

## Claims

1. A method for improving the reading of content, especially text content, for persons suffering from dyslexia, and comprising the display, in a content rendering device (DISP), of graphic content,
said method being **characterized in that** it comprises an alternation of display periods, during which all or part of the graphic content is displayed, and periods of absence of display, during which the graphic content is not displayed, according to successive periodic cycles performed at a predetermined frequency F_{d},
each cycle having a duration T and comprising a display period of duration T₁ followed or preceded by a non-display period of duration T₂, said frequency F_{d} being defined by the relation F_{d} = 1 / [T₁+T₂], wherein the frequency F_{d} is comprised in a range of values from 60 to 90 Hz, and **characterized in that**
the duration T₁ is comprised in an interval of values greater than or equal to 15%, and less than 30%, of the duration T of said cycles.

2. The method according to claim 1, wherein the frequency F_{d} is equal to 70 Hz or 84 Hz and the duty cycle T₁ / [T₁+T₂] is equal to 20%.

3. The method according to claim 1 or 2, wherein the frequency F_{d} varies over time.

4. The method according to claim 3, wherein the predetermined frequency F_{d} varies by increasing in successive steps to a maximum value according to a first speed, referred to as increase speed, and then varies by decreasing in successive steps to a minimum value according to a second speed, referred to as decrease speed, the increasing and decreasing variations repeating iteratively over time.

5. The method according to claim 4, wherein said decrease speed is equal to said increase speed.

6. The method according to claim 5, wherein said successive steps are of equal durations.

7. The method according to claim 5, wherein said successive steps vary in duration such that the value of said frequency F_{d} varies according to a triangular, sawtooth or sinusoidal waveform between said maximum value and said minimum value.

8. The method according to any one of the preceding claims, wherein the duration T₁ of said display periods varies over time.

9. The display method according to any one of the preceding claims, wherein said display device is included in the following list: rendering screen, computer, tablet, tactile tablet, telephone, smartphone, smartwatch, e-book, guide or apparatus to aid the circulation of vehicles or pedestrians.

10. The method according to any one of the preceding claims, wherein said predetermined frequency F_{d} is defined by a user.

11. A display device (DISP) for use in the treatment of dyslexia disorders, the device comprising a module (DISPMOD) for rendering graphic content,
**characterized in that** said display device (DISP) is configured to alternate display periods, during which all or part of the graphic content is displayed, and periods of absence of display, during which the graphic content is not displayed, according to successive cycles performed at a predetermined frequency F_{d}, each cycle having a duration T and comprising a display period of duration T₁ followed or preceded by a non-display period of duration T₂, **in that** said display device is configured so that the frequency F_{d} is comprised in a range of values from 60 to 90 Hz, and being **characterized in that** the duration T₁ is comprised in an interval of values greater than or equal to 15%, and less than 30%, of the duration T of said cycles.

12. A computer program product, **characterized in that** it comprises program code instructions for executing the steps of a method according to any one of claims 1 to 9, when said program is executed on a computer.
